# FASCICULE DE BREVET EUROPEEN

(11) **EP 3 899 339 B1**
(45) Date de publication et mention de la délivrance du brevet: **30.11.2022**
(21) Numéro de dépôt: 19832952.6
(22) Date de dépôt: 20.12.2019
(51) Int. Cl.: F16L 11/04, F16L 11/08

(54) **CONDUITE FLEXIBLE POUR LE TRANSPORT D'UN FLUIDE EN MILIEU SOUS-MARIN ET PROCÉDÉ ASSOCIÉ**
FLEXIBLES ROHR ZUM FÖRDERN EINES FLUIDS IN EINER UNTERWASSERUMGEBUNG UND ZUGEHÖRIGES VERFAHREN
FLEXIBLE PIPE FOR CONVEYING A FLUID IN A SUBMARINE ENVIRONMENT, AND ASSOCIATED METHOD

(30) Priorité: 20.12.2018 FR 1873505
(43) Date de publication de la demande: 27.10.2021
(73) Titulaire: TECHNIP N-POWER, 92400 Courbevoie (FR)
(72) Inventeur: DEMANZE, Frédéric, 76490 CAUDEBEC EN CAUX (FR)
(74) Mandataire: Lavoix
(86) Numéro de dépôt international: PCT/EP2019/086732
(87) Numéro de publication internationale: WO 2020/128002

(56) Documents cités:
- WO-A1-2014/128422
- FR-A1- 2 670 862
- US-A1- 2012 186 684

## Description

L'invention concerne le domaine technique des conduites flexibles pour le transport d'un fluide en milieu sous-marin.

Plus particulièrement, l'invention concerne les conduites flexibles non liées mises en œuvre pour le transport d'hydrocarbures en milieu sous-marin.

Les conduites flexibles pour le transport d'un fluide en milieu sous-marin sont immergées au sein d'une étendue d'eau à des profondeurs pouvant dépasser 3000 m. Elles trouvent notamment leur intérêt dans l'acheminement d'eau et/ou d'hydrocarbures entre une installation de fond et une installation de surface. Elles peuvent également être utilisées pour raccorder deux installations de fond. Certaines conduites flexibles peuvent par ailleurs être utilisées pour raccorder deux installations de surface.

La structure d'une conduite flexible est par exemple décrite au sein des documents normatifs API RP 17B, 5ième édition, publié en Mai 2014 et API 17J, 4ième édition, publié en Mai 2014 par l'American Petroleum Institute.

Les documents WO 2014/128422 A1, FR 2 670 862 A1 et US 2012/186684 A1 décrivent des conduites flexibles.

Typiquement, une conduite flexible comprend une gaine interne d'étanchéité appelée dans le domaine technique de l'invention « gaine de pression ». La gaine interne d'étanchéité forme un passage interne de circulation du fluide et assure ainsi son transport de manière étanche.

D'importants efforts de traction peuvent s'exercer sur la conduite flexible notamment lorsqu'elle s'étend à travers de profondes étendues d'eau. Une paire de nappes d'armure de traction est agencée autour de la gaine interne pour reprendre ces efforts de traction. La paire de nappes d'armure de traction est typiquement composée de fils métalliques enroulés en hélice selon un pas long, c'est-à-dire que la valeur absolue de l'angle d'hélice est comprise entre 20° et 55°.

Afin de prévenir l'entrée d'eau de l'étendue d'eau au sein de la conduite flexible, cette dernière comprend généralement une gaine externe polymérique de protection agencée autour de la paire de nappes d'armure de traction. La gaine externe présente généralement une épaisseur de 10 mm.

La gaine interne et la gaine externe délimitent un espace appelé espace annulaire. La paire de nappes d'armure de traction est agencée au sein de l'espace annulaire.

Le fluide transporté est généralement composé d'hydrocarbures bruts. Ces hydrocarbures comprennent généralement un mélange de gaz tels que du dioxyde de carbone, du méthane ou encore du sulfure d'hydrogène. Le fluide transporté comprend également de l'eau et éventuellement des particules de sable.

Les gaz contenus dans le fluide transporté diffusent à travers la gaine interne et s'accumulent au sein de l'espace annulaire. L'espace annulaire comprend également de l'eau qui résulte d'une perte accidentelle d'étanchéité de la gaine externe et/ou de la diffusion et condensation d'eau contenu dans le fluide transporté à travers la gaine interne. La présence d'eau et de ces gaz au sein de l'espace annulaire engendrent divers phénomènes de corrosion des éléments métalliques au sein de l'espace annulaire. Les fils d'armure peuvent alors être soumis par exemple à de la corrosion sous contrainte (« Stress Corrosion Cracking, SCC » en langue anglaise).

Pour réduire la corrosion des fils d'armure, il est enseigné par exemple dans le document API 17B mentionné ci-dessus d'augmenter l'épaisseur de la gaine externe. Ceci permet de réduire les risques de déchirure de la gaine externe et ainsi de réduire la probabilité d'avoir de l'eau dans l'espace annulaire et d'induire des phénomènes de corrosion.

Cependant, cette solution n'est pas entièrement satisfaisante. En effet, bien que les risques de déchirure de la gaine externe soient réduits, l'eau contenu dans le fluide transporté peut toujours diffuser au travers de la gaine interne et condenser au sein de l'espace annulaire. En présence des gaz ayant diffusés à travers la gaine interne, ceci peut conduire à la corrosion des fils d'armure. De plus, l'augmentation de l'épaisseur de la gaine externe augmente les coûts de fabrication de la conduite flexible puisque plus de matière première est nécessaire.

Par conséquent, il existe un besoin de fournir une conduite flexible dans laquelle les éléments métalliques sont préservés de la corrosion ainsi qu'un procédé permettant de fabriquer une telle conduite flexible qui soit simple de mise en œuvre et peu coûteux.

A cet effet, l'invention a pour objet une conduite flexible pour le transport d'un fluide en milieu sous-marin présentant un axe longitudinal et comprenant de l'intérieur vers l'extérieur de la conduite :
- une gaine interne polymérique pour former un passage de circulation du fluide,
- au moins une paire de nappes d'armure de traction pour renforcer la conduite flexible contre des efforts axiaux,
- une couche externe imperméable aux liquides, la gaine interne et la couche externe délimitant un espace annulaire dans lequel ladite au moins une paire de nappes d'armure de traction est agencée,
- ladite couche externe présentant une épaisseur comprise entre 1/125 et 1/75 du diamètre interne de la couche externe et comprenant au moins une bande enroulée en hélice formant une pluralité de spires, ladite bande étant formée d'une matrice polymérique renforcée par une pluralité d'éléments de renfort.

L'épaisseur de la couche externe selon l'invention favorise la diffusion des gaz tels que le dioxyde de carbone, le sulfure d'hydrogène et/ou le méthane au travers de la couche externe vers l'extérieur de la conduite flexible. La concentration en gaz au sein de l'espace annulaire est ainsi réduite et la paire de nappes d'armure de traction est préservée de la corrosion.

En revanche, il a été constaté que lors de l'enroulement de la conduite flexible sur les dispositifs de stockage tels que les bobines, la couche externe se déforme et forme des plis (« folding » en langue anglaise) en raison de la faible épaisseur de la couche externe. Ces plis peuvent endommager de manière irréversible la couche externe et provoquer sa rupture.

Ce problème est résolu par la présente invention en renforçant la couche externe par une pluralité d'éléments de renfort. En revanche, afin d'assurer leur fonction de renfort, les éléments de renfort doivent être orientés selon un angle spécifique par rapport à l'axe longitudinal de la conduite flexible. Cet angle est par exemple proche de 90°. Or, le procédé d'extrusion conventionnel de la couche externe ne permet pas une telle orientation des éléments de renfort. Pour résoudre ce problème, il a été découvert que la couche externe doit être sous la forme d'une bande polymérique renforcée. En effet, la bande peut être enroulée en hélice de façon à orienter les éléments de renfort selon l'angle souhaité par rapport à l'axe longitudinal de la conduite flexible. La matrice polymérique assure l'étanchéité vis-à-vis des fluides de la bande ainsi que la flexibilité de la couche externe et partant, de la conduite flexible.

La bande est en outre enroulée de façon à obtenir une couche externe imperméable aux liquides pour empêcher la pénétration d'eau tout en favorisant la diffusion des gaz vers l'extérieur de la conduite flexible.

Préférentiellement, l'épaisseur de la couche externe est comprise entre 3 mm et 5 mm pour un diamètre interne de la couche externe compris entre 250 mm et 600 mm.

Avantageusement, les spires de la bande sont liées entre elles. La liaison des spires de la bande renforce l'étanchéité de la couche externe vis-à-vis des liquides ainsi que sa résistance à la pression interne notamment.

Avantageusement, les spires de la bande présentent un recouvrement. Le recouvrement des spires permet d'améliorer encore plus l'étanchéité de la couche externe vis-à-vis des liquides par rapport à une couche externe dans laquelle les spires de la bande sont uniquement jointives.

Avantageusement, la bande est enroulée selon un angle d'hélice de valeur absolue comprise entre 60° et 90° par rapport à l'axe longitudinal de la conduite flexible. Lorsque l'angle d'hélice est compris dans une telle gamme de valeur, la résistance de la couche externe aux efforts radiaux est améliorée. La couche externe présente alors une double fonction qui est d'assurer l'étanchéité de la conduite flexible vis-à-vis des liquides tout en permettant la diffusion des gaz vers l'extérieur mais également d'empêcher le gonflement des nappes d'armure de traction sous l'effet de l'effet de fond inverse. En effet, lorsque la conduite flexible, quelle que soit sa nature, est soumise à une pression externe qui est plus élevée que la pression interne, il peut se produire une compression axiale qui est connue de l'homme du métier sous le nom d'effet de fond inverse (« reverse end cap effect » en langue anglaise). L'effet de fond inverse a tendance à comprimer axialement la conduite flexible, à raccourcir sa longueur et à augmenter son diamètre, ce qui a tendance à provoquer un gonflement de la paire de nappes d'armure de traction. Dans le cas où la couche externe est étanche, la pression hydrostatique régnant à l'extérieur de la conduite s'oppose efficacement au gonflement des armures de traction. Cependant, si la couche externe n'est plus étanche, par exemple, suite à une déchirure accidentelle, la pression hydrostatique ne s'oppose plus au gonflement de la paire de nappes d'armure de traction. Par suite, en l'absence d'un moyen additionnel ayant pour fonction de limiter ce gonflement, les fils composant les nappes d'armure de traction peuvent flamber selon un mode radial, ce qui peut provoquer une déformation locale irréversible de la paire de nappes d'armure ayant la forme d'une « cage d'oiseau », et ainsi entraîner la ruine de la conduite flexible La couche externe selon ce mode de réalisation, limite ce risque de déformation locale de la paire de nappes d'armure de traction.

Préférentiellement, la couche externe comprend une pluralité de bandes superposées, préférentiellement entre 2 à 8 bandes superposées. La pluralité de bandes permet l'utilisation de bandes de plus faible épaisseur. Ainsi, lorsque les spires d'une bande présentent un recouvrement, l'épaisseur des zones de recouvrement est moins importante et ainsi les éventuels problèmes mécaniques de la couche externe entrainés par les variations d'épaisseur sont réduits. Avantageusement, selon ce mode de réalisation, au moins deux bandes sont croisées. Ceci améliore les propriétés de la couche externe.

Selon un mode de réalisation préféré, les éléments de renfort sont des fibres telles que des fibres organiques, des fibres minérales ou des fibres métalliques.

Avantageusement, les éléments de renfort sont orientés selon un angle de valeur absolue comprise entre 0 et 40° par rapport à l'axe longitudinal de la bande.

Avantageusement, la matrice polymérique est choisie parmi les matériaux thermoplastiques tels qu'un polyéthylène, un polypropylène, un polyamide ou les matériaux thermoplastiques élastomères tels qu'un thermoplastique vulcanisé, notamment un silicone thermoplastique vulcanisé ou les matériaux thermodurcissables.

Selon un mode de réalisation préféré, les éléments de renfort sont noyés dans la matrice polymérique.

L'invention a également pour objet un procédé de fabrication d'une conduite flexible pour le transport d'un fluide en milieu sous-marin comprenant les étapes suivantes :
(a) former une gaine interne polymérique formant un passage de circulation du fluide,
(b) former au moins une paire de nappes d'armure de traction pour renforcer la conduite flexible contre des efforts axiaux,
(c) enrouler en hélice une bande formant une pluralité de spires, ladite bande étant formée d'une matrice polymérique renforcée par une pluralité d'éléments de renfort pour former une couche externe imperméable aux composés liquides présentant une épaisseur comprise entre 1/125 et 1/75 du diamètre interne de la couche externe, la couche externe et la gaine interne délimitant un espace annulaire dans lequel ladite au moins une paire de nappes d'armure de traction est agencée.

Avantageusement, à l'étape (c) la bande est enroulée avec un recouvrement des spires.

Avantageusement, le procédé comprend une étape de liaison des spires.

Avantageusement, l'étape de liaison des spires comprend une sous étape de chauffage de la bande.

Avantageusement, le procédé comprend une étape selon laquelle on applique une pression sur la bande.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- La figure 1 représente schématiquement une vue en perspective d'un exemple de réalisation d'une conduite flexible selon l'invention,
- La figure 2 représente schématiquement une vue en perspective d'un autre exemple de réalisation d'une conduite flexible selon l'invention,
- Les figures 3a et 3b représentent schématiquement une vue en perspective d'exemples de réalisation d'une bande selon l'invention,
- Les figures 4a et 4b représentent schématiquement une vue en coupe transversale d'exemples de réalisation d'une couche externe selon l'invention,
- La figure 5 représente schématiquement une installation de fabrication d'une conduite flexible selon l'invention,
- La figure 6 représente schématiquement un dispositif de fabrication d'une couche externe d'une conduite flexible selon l'invention.

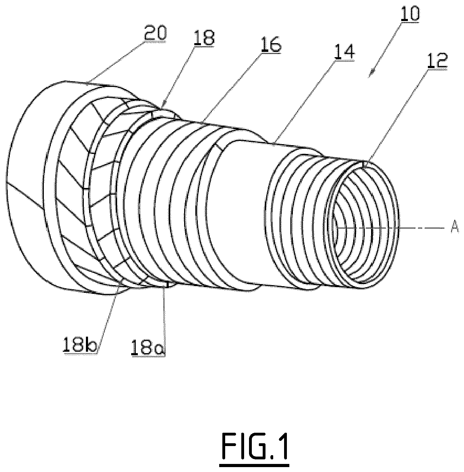

La figure 1 représente un exemple d'une conduite flexible (10) selon l'invention.

La conduite flexible (10) est destinée à être immergée au sein d'une étendue d'eau. L'étendue d'eau peut être un lac, une mer ou un océan. Généralement, la profondeur de l'étendue d'eau est au moins de 100 m, et plus particulièrement comprise entre 500 m et 3000 m.

La conduite flexible (10) achemine un fluide à travers l'étendue d'eau entre une première installation et une seconde installation. La première installation est par exemple une installation sous-marine comme une tête de puit ou un collecteur (appelé « manifold » en langue anglaise). La seconde installation est par exemple une installation de surface comme une unité flottante de production, de stockage et de déchargement (FPSO pour « Floating Production Storage and Offloading » en langue anglaise) ou une plate-forme à ancrage tendu (TLP pour « Tension Leg Plaftorm » en langue anglaise). La conduite flexible (10) assure le transport du fluide entre deux installations de surface ou entre une installation sous-marine et une installation de surface ou encore entre deux installations sous-marines.

Le fluide transporté par la conduite flexible (10) est par exemple de l'eau et/ou un fluide pétrolier et/ou gazier. Le fluide pétrolier et/ou gazier est formé d'un mélange multiphasique comprenant une partie liquide formée principalement de composés carbonés linéaires et/ou cycliques, saturés et/ou insaturés, de densité variable et d'eau, une partie gazeuse composée par exemple de méthane (CH4), de dioxyde de carbone (CO2), de sulfure d'hydrogène (H2S) et autres gaz et enfin, d'une partie solide composée généralement de particules de sable. La température du fluide au sein de la conduite flexible (10) est comprise entre 50°C et 200°C, plus particulièrement entre 50°C et 130°C. La température du fluide varie durant le transport entre la première installation et la seconde installation.

Le fluide présente par exemple une pression partielle en dioxyde de carbone comprise entre 1 bar et 300 bar et une pression partielle en sulfure d'hydrogène inférieure à 1 bar. La pression partielle de chacun des gaz au sein du fluide dépend notamment de la nature du champ pétrolifère et/ou gazier exploité.

Comme représenté à titre d'exemple sur la figure 1, la conduite flexible (10) comprend une pluralité de couches concentriques agencées autour d'un axe longitudinal (A). Selon l'invention, la conduite flexible (10) comprend une gaine interne (14), au moins une paire de nappes d'armure de traction (18) et une couche externe (20).

La conduite flexible (10) est préférentiellement une conduite flexible de type non liée. Par non liée, il est entendu au sens de la présente invention, une conduite flexible (10) dans laquelle la paire de nappes d'armure de traction (18) est libre de se déplacer par rapport à la gaine interne (14) lors d'une flexion de la conduite flexible (10). Préférentiellement toutes les couches de la conduite flexible (10) sont libres de se déplacer les unes par rapport aux autres. Ceci rend la conduite flexible (10) plus flexible qu'une conduite dans laquelle les couches sont liées les unes aux autres.

Préférentiellement, la conduite flexible (10) comprend également une carcasse interne (12) agencée à l'intérieur de la gaine interne (14).

La couche flexible (10) comprend avantageusement une voûte de pression (16) agencée autour de la gaine interne (14). La voûte de pression (16) est agencée entre la paire de nappes d'armure de traction (18) et la gaine interne (14).

La carcasse interne (12) renforce la conduite flexible (10) contre les efforts de pression externe. Elle limite les risques d'effondrement de la conduite flexible (10) lorsque la pression à l'extérieur de la conduite flexible (10) est supérieure à la pression à l'intérieur de la conduite flexible (10). La carcasse interne (12) comprend au moins un fil métallique profilé et enroulé en hélice selon un pas court. Par pas court, il est entendu au sens de la présente invention un angle d'hélice d'une valeur absolue comprise entre 75° et 90°. La section du fil métallique profilé présente une géométrie en forme de S par exemple. Pour renforcer la résistance de la carcasse aux efforts de pression externe, les spires du fil métallique sont agrafées les unes aux autres. Le matériau métallique est par exemple un acier inoxydable. Lorsque la carcasse interne (12) est présente, la conduite flexible (10) est dite à passage non lisse (« rough bore» en langue anglaise). Lorsque la conduite flexible (10) est dépourvue de carcasse interne (12), elle est dite à passage lisse (« smooth bore » en langue anglaise). La carcasse interne (12) est généralement en contact avec le fluide transporté.

La gaine interne (14) est agencée autour de la carcasse interne (12) lorsque celle-ci est présente. La gaine interne (14) forme un passage de circulation du fluide. Elle assure le transport du fluide à travers l'étendue d'eau de manière étanche. La gaine interne (14) est polymérique c'est-à-dire que plus de 50% du matériau formant la gaine interne (14) est un polymère. Le polymère est par exemple une polyoléfine telle qu'un polypropylène, un polyéthylène ou un polyamide ou encore un polymère fluoré tel qu'un polyfluorure de vinylidène (PVDF). Le matériau polymérique est choisi en fonction de la nature et de la température du fluide transporté. L'épaisseur de la gaine interne (14) est par exemple comprise entre 4 mm et 15 mm. La gaine interne (14) est réalisée par extrusion par exemple autour de la carcasse interne (12).

La voûte de pression (16) renforce la résistance de la conduite flexible (10) contre la pression interne. Elle limite les risques d'éclatement de la conduite flexible (10) notamment lorsque la pression à l'intérieur de la conduite flexible (10) est supérieure à la pression à l'extérieur de la conduite flexible (10). La voûte de pression (16) est agencée autour de la gaine interne (14). La voûte de pression (16) est formée d'au moins un fil métallique profilé et enroulé en hélice selon un pas court. La section du fil métallique profilé présente par exemple une géométrie en forme de I, K, Z ou U. Le matériau du fil métallique profilé est par exemple un acier au carbone.

La paire de nappes d'armure de traction (18) est destinée à renforcer la conduite flexible (10) contre les efforts de traction. La paire de nappes d'armure de traction (18) comprend une nappe d'armure de traction interne (18a) et une nappe d'armure de traction externe (18b). La paire de nappes d'armure de traction (18) comprend une pluralité de fils d'armure de traction enroulés selon un pas long. Par pas long, il est entendu un angle d'hélice de valeur absolue comprise entre 20° et 55°. La section des fils d'armure de traction est par exemple rectangulaire ou circulaire. Les fils d'armure de traction sont par exemple métalliques. Le matériau métallique est par exemple un acier au carbone.

Les fils d'armure de traction de la nappe d'armure de traction interne (18a) sont enroulés avec un angle d'hélice opposé à l'angle d'hélice des fils d'armure de traction de la nappe d'armure de traction externe (18b). Les fils d'armure de traction d'une même nappe d'armure de traction (18a, 18b) sont jointifs.

La couche externe (20) est agencée autour de la paire de nappes d'armure de traction (18). La couche externe (20) est agencée autour de la nappe d'armure de traction externe (18b). Par autour de la nappe d'armure de traction externe (18b), il est entendu au sens de la présente invention, que la couche externe (20) est agencée à l'extérieur de la nappe d'armure de traction externe (18b). Des couches additionnelles peuvent être agencées entre la couche externe (20) et la nappe d'armure de traction externe (18b). La couche externe (20) est imperméable aux liquides et forme une barrière de protection contre la pénétration d'eau de l'étendue d'eau à l'intérieur de la conduite flexible (10).

La couche externe (20) et la gaine interne (14) délimitent entre elles un espace annulaire. L'espace annulaire comprend selon l'exemple représenté sur la figure 1, la voûte de pression (16) et la paire de nappes d'armure de traction (18).

Les gaz tels que le dioxyde de carbone et/ou le méthane et/ou le sulfure d'hydrogène et l'eau contenus dans le fluide diffusent à travers la gaine interne (14) et s'accumulent au sein de l'espace annulaire. Ces composés peuvent induire la corrosion des fils métalliques de la paire de nappes d'armure de traction (18) et des fils métalliques profilés de la voûte de pression (16).

Pour réduire la concentration en gaz au sein de l'espace annulaire, la couche externe (20) présente une épaisseur comprise entre 1/125 et 1/75 du diamètre interne de la couche externe (20). Le diamètre interne de la couche externe (20) est compris entre 100 mm et 600 mm. Préférentiellement, l'épaisseur de la couche externe (20) est comprise entre 3 mm et 5 mm pour un diamètre interne de la couche externe (20) compris entre 250 mm et 600 mm. Selon l'invention, l'épaisseur de la couche externe (20) et le diamètre interne de la couche externe (20) sont mesurées dans les mêmes unités, en millimètre. Une telle épaisseur favorise la diffusion des gaz, notamment le dioxyde de carbone et/ou le méthane et/ou le sulfure d'hydrogène au travers de la couche externe (20) et réduit donc la concentration de ces gaz au sein de l'espace annulaire. La corrosion des fils métalliques de la paire de nappes d'armure de traction (18) et de la voûte de pression (16) est ainsi réduite.

Selon l'invention, la couche externe (20) est formée d'au moins une bande (22) enroulée en hélice. Pour améliorer la résistance aux efforts radiaux, la bande (20) est enroulée avec un angle d'hélice de valeur absolue comprise entre 60° et 90° par rapport à l'axe longitudinal (A) de la conduite flexible (10).

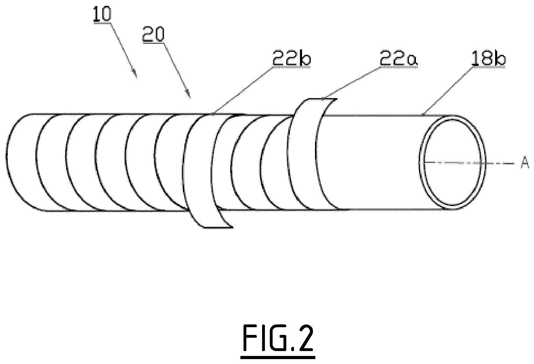

Selon un mode de réalisation préféré de l'invention représenté sur la figure 2, la couche externe (20) comprend une pluralité de bandes (22), par exemple une bande interne (22a) et une bande externe (22b). Préférentiellement, la couche externe (20) comprend entre 2 à 8 bandes (22) superposées.

Pour améliorer la résistance de la couche externe (20) lorsqu'elle comprend une pluralité de bandes (22), au moins deux bandes sont croisées. Par exemple, la bande interne (22a) et la bande externe (22b) sont croisées. Avantageusement, pour optimiser les propriétés de la couche externe (20) notamment vis-à-vis de la pression à l'intérieur de la conduite flexible (10), les bandes (22) sont enroulées avec un angle d'hélice opposé.

Selon un mode de réalisation préféré, les bandes (22) sont liées entre elles. Par exemple, la bande externe (22b) est liée à la bande interne (22a). La liaison est réalisée par exemple par fusion d'au moins une partie d'une bande (22) sur une autre bande (22) ou par auto-vulcanisation des bandes (22). Elles sont avantageusement liées sur toute la longueur de la conduite flexible (10) ou à des intervalles compris entre 0.5 m et 2 m.

Pour améliorer l'étanchéité de la couche externe (20), les spires de la bande (22) présentent un recouvrement. La largeur du recouvrement entre les spires de la bande (22) est par exemple comprise entre 5% et 70% de la largeur de la bande (22).

Pour améliorer encore l'étanchéité de la couche externe (20), les spires de la bande (22) sont liées par exemple par collage, par fusion ou par tout autre procédé adapté. La liaison par fusion de la bande (22) est préférée car elle permet de faciliter le procédé d'assemblage et confère une force de liaison optimale.

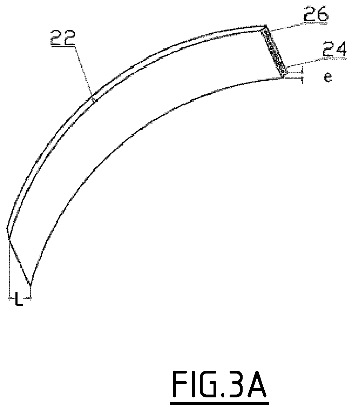

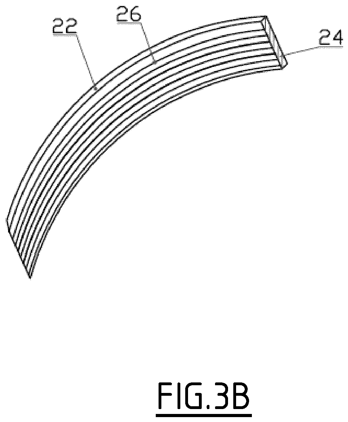

La bande (22) est par exemple représentée sur les figures 3a et 3b. La bande (22) présente une largeur (L) comprise entre 50 mm et 150 mm. L'épaisseur de la bande (22) est comprise entre 0.4 mm et 2 mm.

Préférentiellement, la bande (22) présente une résistance à la traction dans le sens longitudinale de la bande (22) comprise entre 100 daN/cm et 800 daN/cm tel que mesuré à 23°C selon la norme ISO527-1 (2012).

La bande (22) est formée d'une matrice polymérique (24) renforcée par une pluralité d'éléments de renfort (26).

La matrice polymérique (24) est choisie parmi les matériaux thermoplastiques tels qu'un polyéthylène, un polypropylène, un polyamide ou les matériaux thermoplastiques élastomères tel qu'un thermoplastique vulcanisé, notamment un silicone thermoplastique vulcanisé ou les matériaux thermodurcissables tels que les silicones ou un mélange de ceux-ci. Préférentiellement, l'allongement au seuil de la matrice polymérique (24) est supérieur ou égal à 5%, avantageusement supérieur ou égal à 7% et encore plus avantageusement supérieur ou égal à 10%.

Les éléments de renfort (26) sont par exemple des fibres telles que des fibres organiques, des fibres minérales ou des fibres métalliques. Les fibres organiques sont par exemple des fibres d'aramide ou de polytéréphtalate d'éthylène ou de polyéthylène à haut poids moléculaire. Les fibres minérales sont par exemple des fibres de carbone ou de basalte ou de verre. Les fibres métalliques sont par exemple formées de bore ou d'alumine ou autre matériau métallique convenant à la présente invention. Avantageusement, le module d'élasticité des éléments de renfort (26) est supérieur ou égal à 10 GPa, avantageusement supérieur à 30 GPa, encore plus avantageusement supérieur ou égal à 50 GPa et de manière préférée compris entre 50GPa et 150 GPa. De manière avantageuse, les éléments de renfort forment un tissu, un non-tissé ou un mat.

Les éléments de renfort tels que les fibres, sont orientés selon un angle de valeur absolue comprise entre 0° et 40° par rapport à l'axe longitudinal (B) de la bande (22).

Ainsi, la bande (22) présente des propriétés anisotropes. Les éléments de renfort (26) en combinaison d'un angle d'enroulement de la bande (22) compris entre 60° et 90°, confèrent à la bande (22) une résistance suffisante permettant de limiter la déformation radiale de la couche externe (20) par rapport à l'axe de la conduite flexible (10). En outre, la matrice polymérique (24) présente un allongement au seuil permettant de préserver la flexibilité de la couche externe (20) dans la direction axiale de la conduite flexible (10).

Selon un premier exemple de réalisation de la bande (22) représenté sur la figure 3a, les éléments de renfort (26) sont noyés dans la matrice polymérique (24). Ceci permet de protéger les éléments de renfort de l'usure résultant des frottements entre les couches de la conduite flexible (10). Par noyé dans la matrice, il est entendu que les éléments de renfort (26) sont entièrement enveloppés par la matrice polymérique (24).

Selon un deuxième exemple de réalisation de la bande (22) représenté sur la figure 3b, les éléments de renfort (26) sont agencés sur une surface externe de la bande (22). Les éléments de renfort (26) sont avantageusement liés à la matrice polymérique (24). La liaison peut être chimique par exemple par collage des éléments de renfort (24) ou mécanique.

Selon un autre exemple de réalisation (non représenté), les éléments de renfort (26) sont agencés sur les deux surfaces de la bande (22). Ceci permet d'augmenter la densité des éléments de renfort (26) au sein de la bande (22).

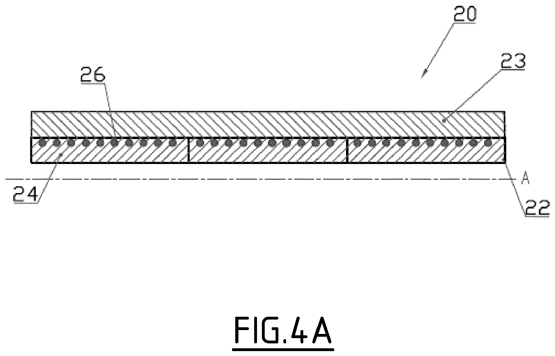

La figure 4a représente un exemple de réalisation de la couche externe (20). La couche externe (20) comprend par exemple une bande (22) et une couche supplémentaire (23). La bande (22) comprend la matrice polymérique (24) et les éléments de renfort (26) agencés sur une surface externe de la bande (22) tel que décrit en référence à la figure 3b. Avantageusement, les éléments de renfort (26) sont agencés sur la surface externe de la bande (22) la plus proche radialement de la couche supplémentaire (23). La bande (22) est enroulée en hélice selon un pas court. Les spires de la bande (22) sont jointives. La couche supplémentaire (23) est par exemple une gaine extrudée autour de la bande (22). Le matériau de la couche supplémentaire (23) est par exemple choisi parmi les matériaux thermoplastiques tels qu'un polyéthylène, un polypropylène, un polyamide ou les matériaux thermoplastiques élastomères tels qu'un thermoplastique vulcanisé, notamment un silicone thermoplastique vulcanisé ou les matériaux thermoplastiques thermodurcissables tels que les silicones ou un mélange de ceux-ci. De manière préférentielle, le matériau de la couche supplémentaire (23) est identique à la matrice polymérique de la bande (22). Avantageusement, la couche supplémentaire (23) est liée à la bande (22). La liaison est par exemple réalisée par fusion des matériaux de la couche supplémentaire (23) et de la bande (22) lors de l'extrusion de la couche (23) sur la bande (22) par exemple.

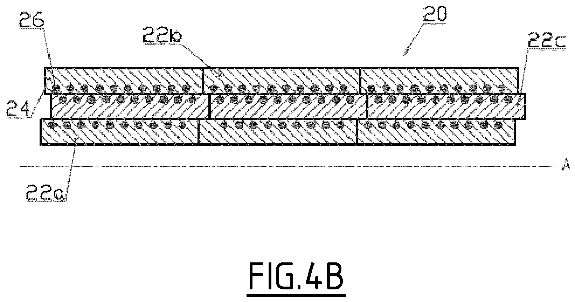

Selon un autre exemple représenté sur la figure 4b, la couche externe comprend par exemple une pluralité de bandes (22), notamment une bande interne (22a), une bande centrale (22c) et une bande externe (22b). Les bandes (22) comprennent la matrice polymérique (24) et les éléments de renfort (26) agencés sur une surface externe de la bande (22) tel que décrit en référence à la figure 3b. La bande interne (22a) est enroulée en hélice selon un pas court. Les éléments de renfort (26) de la bande interne (22a) sont agencés sur la surface externe de la bande interne (22a) la plus éloignée radialement de l'axe longitudinal (A) de la conduite flexible (10). La bande centrale (22c) est enroulée en hélice à pas court autour de la bande interne (22a). Les éléments de renfort (26) de la bande centrale (22c) sont agencés sur la surface externe de la bande centrale (22c) la plus éloignée radialement de l'axe longitudinal (A) de la conduite flexible (10). Ceci permet de limiter l'usure des éléments de renfort (26) résultant de frottements entre les éléments de renfort (26) des bandes (22). La bande externe (22b) est enroulée en hélice autour de la bande centrale (22c). Les éléments de renfort (26) de la bande externe (22b) sont agencés sur la surface externe de la bande externe (22b) la plus proche radialement de l'axe longitudinal (A) de la conduite flexible (10). La matrice (24) de la bande externe (22b) protège ainsi les éléments de renfort (26) des attaques des rayons UV et de tout dommage extérieur résultant de frottements avec les équipements de stockage ou de pose par exemple.

La conduite flexible (10) peut comprendre des couches additionnelles telles que des bandes anti-usure agencées entre la voûte de pression (16) et la nappe d'armure de traction interne (18a) et/ou entre la nappes d'armure de traction interne (18a) et la nappe d'armure de traction externe (18b). Les bandes anti-usure limitent l'usure de la voûte de pression (16) et de la paire de nappes d'armure de traction (18) sous l'effet des frottements.

La conduite flexible (10) peut comprendre une paire de nappes d'armure de traction supplémentaire lorsque les efforts de traction sont particulièrement importants.

Avantageusement, la conduite flexible (10) comprend des bandes d'isolation thermique. Par exemple, des bandes d'isolation thermique sont enroulées selon un pas court entre la couche externe (20) et la nappe d'armure de traction externe (18b). Les bandes d'isolation thermique sont par exemple formées d'une matrice polymérique en polypropylène.

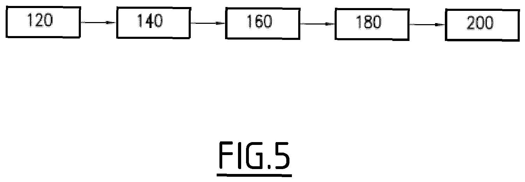

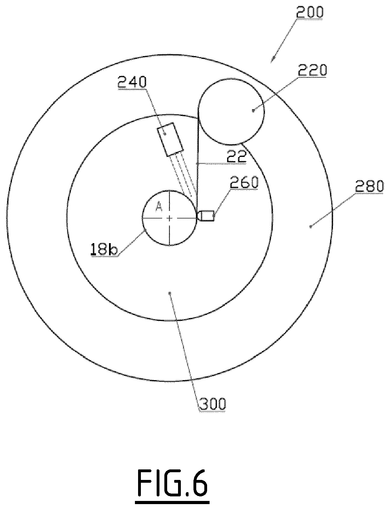

Une installation de fabrication de la conduite flexible (10) va maintenant être décrite en référence à la figure 5 et la figure 6.

L'installation comprend un poste (120) de fabrication de la carcasse interne (12), un poste (140) de fabrication de la gaine interne (14), un poste (160) de fabrication de la voûte de pression (16), un poste (180) de fabrication de la paire de nappes d'armure de traction (18) et un poste (200) de fabrication de la couche externe (20).

Le poste (120) de fabrication de la carcasse interne (12) comprend un plateau tournant sur lequel est embarqué au moins un dispositif de profilage du fil métallique et des moyens d'agrafage du fil métallique agencés en aval du dispositif de profilage. Le plateau tournant comprend en outre un passage central de la carcasse interne (12). Le fil métallique est stocké et déroulé à partir d'une bobine agencée en amont du plateau tournant.

La carcasse (12) est transférée au sein du poste (140) de fabrication de la gaine interne (14). Le poste de fabrication (140) de la gaine interne (14) comprend une extrudeuse permettant de former la gaine interne (14) autour de la carcasse interne (12) et optionnellement des moyens de refroidissement de la gaine interne (14) situés en aval de l'extrudeuse tels que des buses d'air ou d'eau pour accélérer le refroidissement de la gaine interne (14).

La gaine interne (14) agencée autour de la carcasse interne (12) est transférée au poste (160) de fabrication de la voûte de pression (16). Le poste (160) de fabrication de la voûte de pression (16) comprend des moyens d'enroulement du fil métallique profilé.

L'ensemble est transféré au poste (180) de fabrication de la paire de nappes d'armure de traction (18). Le poste (180) de fabrication de la paire de nappes d'armure de traction (18) comprend une pluralité de bobines à partir desquelles sont déroulées les fils d'armure de traction.

La couche externe (20) est fabriquée autour de la paire de nappes d'armure de traction (18) au poste (200) de fabrication de la couche externe (20). Avantageusement, le poste (200) de fabrication de la couche externe (20) est agencé en ligne avec le poste (180) de fabrication de la paire de nappes d'armure de traction (18). Selon un autre exemple, le poste (200) de fabrication de la couche externe (20) n'est pas agencé en ligne avec le poste de fabrication de la paire de nappes d'armure de traction (18). L'installation comprend alors un dispositif de stockage de la conduite flexible (10) permettant de stocker et de dévider la conduite flexible (10) au sein du poste (200) de fabrication de la couche externe (20).

Le poste (200) de fabrication de la couche externe (20) est par exemple représenté sur la figure 6. Il comprend un dispositif d'enroulement (220) des bandes (22) monté sur un support (300) d'un plateau tournant (280), et optionnellement un dispositif de chauffage (240). Le poste (200) de fabrication comprend éventuellement au moins un galet presseur (260).

Le dispositif d'enroulement (220) comprend une bobine sur laquelle est enroulée la bande (22). Il est monté sur le support (300) du plateau tournant (280) et est entrainé en rotation. Le dispositif d'enroulement (220) permet de déposer la bande (22) sur la nappe d'armure de traction externe (18b) avec un angle d'enroulement de valeur absolue comprise entre 60° et 90° par rapport à l'axe longitudinal (A) de la conduite flexible (10). Avantageusement, le dispositif d'enroulement (220) est motorisé. Avantageusement, le dispositif d'enroulement (220) comprend un frein. Le frein permet de moduler l'effort de tension auquel est soumis la bande (22) lors de son enroulement autour de la nappe d'armure de traction externe (18b).

Le dispositif de chauffage (240) est configuré pour entrainer la fusion de la matrice polymérique (24) de la bande (22) afin de lier les spires de la bande (22). Le dispositif de chauffage (240) comprend par exemple un laser, une lampe telle qu'une lampe infrarouge, un appareil de soudure ultrasons et/ou un appareil de soufflage d'air chaud. Le dispositif de chauffage (240) est avantageusement monté sur le support (300) du plateau tournant (280) pour être entrainé en rotation conjointement avec le dispositif d'enroulement (220).

Le galet presseur (260) est agencé autour du passage central du plateau tournant (280), au point du contact entre la bande (22) et la nappe d'armure de traction externe (18b). Le galet presseur (260) est destiné à exercer une pression sur la bande (22) lors de l'enroulement autour de la nappe d'armure de traction externe (18b) pour favoriser la liaison entre les spires de la bande (22).

Selon un mode de réalisation particulier non représenté, le poste (200) comprend une pluralité de bobines (220) permettant de déposer plusieurs bandes (22) superposées. Le dispositif de chauffage (240) et le galet presseur (260) permettent alors d'assurer une liaison optimale entre chaque bande (22).

Selon un mode de réalisation particulier non représenté, le poste (200) comprend en outre une extrudeuse pour former la couche supplémentaire (23) autour de la bande (22). Selon ce mode, le dispositif de chauffage (240) et le galet presseur (260) permettent avantageusement d'améliorer la liaison entre la couche supplémentaire (23) et la bande (22).

L'installation selon l'invention permet ainsi la fabrication de la conduite flexible (10) en continue sans interruption de la fabrication. En effet, la fabrication de la couche externe (20) est réalisée simultanément avec la fabrication de la paire de nappes d'armure de traction (18) puisque les postes de fabrication peuvent être agencés en ligne. Aussi, le poste (220) de fabrication de la couche externe (20) met en œuvre des moyens conventionels de fabrication et ne nécessitent pas d'équipements ou de mise au point spécifiques.

Un procédé de fabrication de la conduite flexible (10) va maintenant être décrit.

Selon une première étape optionnelle, on fournit une carcasse interne (12).

Le procédé comprend l'étape (a) de formation de la gaine interne (14) polymérique qui forme le passage de circulation du fluide. Elle comprend l'extrusion de la gaine interne (14) et le refroidissement de la gaine interne (14).

La gaine interne (14) est ensuite déplacée vers le poste de fabrication de la voûte de pression (16). Les fils métalliques sont enroulés en hélice selon un pas court autour de la gaine interne (14) pour former la voûte de pression (16).

Ensuite, le procédé comprend une étape (b) dans laquelle on forme la paire de nappes d'armure de traction (18). Dans une sous-étape, on forme la nappe d'armure de traction interne (18a) par enroulement en hélice d'une pluralité de fils métalliques selon un pas long. Puis, dans une sous-étape supplémentaire, on forme la nappe d'armure de traction externe (18b) par enroulement en hélice d'une pluralité de fils métalliques selon un angle opposé à l'angle d'hélice des fils métalliques de la nappe d'armure de traction interne (18a).

Dans une dernière étape (c), on forme la couche externe (20). Dans cette étape, on enroule en hélice la bande (22) avec avantageusement un recouvrement entre les spires. Avantageusement, on enroule la bande (22) avec un pas court. Avantageusement durant cette étape, la bande (22) est chauffée. Le chauffage est réalisé avant ou après l'enroulement de la bande (22) autour de la nappe d'armure de traction externe (18b). De manière préférée, la bande (22) est chauffée au point de contact entre la bande (22) et la nappe d'armure de traction externe (18b). Avantageusement, selon cette étape, on exerce un effort de pression sur la zone de recouvrement entre les spires de la bande (22).

Selon un autre mode de réalisation, à l'étape (c), on enroule en hélice la bande (22) de façon à ce que les spires de la bande (22) soient jointives. La bande (22) est ensuite avantageusement chauffée. Puis, on forme par extrusion par exemple une couche supplémentaire (23) autour de la bande (22). Avantageusement, on exerce une pression sur la couche supplémentaire (23) après l'extrusion.

Selon encore un autre mode de réalisation, à l'étape (c), on enroule en hélice une pluralité de bande (22). Dans une première sous étape, on enroule une bande interne (22a) selon un pas court avec un recouvrement entre les spires. Dans une étape supplémentaire, on enroule une bande centrale (22c) selon un pas court. Puis dans une étape supplémentaire, on enroule une bande externe (22b) selon un pas court.

Selon un mode de réalisation, avant l'étape (c), la bande (22) est soumise à une étape de calandrage. Préférentiellement, le calandrage de la bande (22) est réalisée à température supérieure à la température ambiante et inférieure à la température de fusion de la matrice polymérique (24). Par exemple, le calandrage de la bande (22) est réalisé à 60°C, préférentiellement à 80°C. Ceci permet d'améliorer la résistance à la température de la bande (22) et ainsi de la couche externe (20).

## Revendications

1. Conduite flexible (10) pour le transport d'un fluide en milieu sous-marin présentant un axe longitudinal (A) et comprenant de l'intérieur vers l'extérieur de la conduite (10) :
- une gaine interne (14) polymérique pour former un passage de circulation du fluide,
- au moins une paire de nappes d'armure de traction (18) pour renforcer la conduite flexible (10) contre des efforts axiaux,
- une couche externe (20) imperméable aux liquides, la gaine interne (14) et la couche externe (20) délimitant un espace annulaire dans lequel ladite au moins une paire de nappes d'armure de traction (18) est agencée,
- ladite couche externe (20) présentant une épaisseur comprise entre 1/125 et 1/75 du diamètre interne de la couche externe (20) et comprenant au moins une bande (22) enroulée en hélice formant une pluralité de spires, ladite bande (22) étant formée d'une matrice polymérique (24) renforcée par une pluralité d'éléments de renfort (26).

2. Conduite flexible selon la revendication 1 **caractérisée en ce que** l'épaisseur de la couche externe (20) est comprise entre 3 mm et 5 mm pour un diamètre interne de la couche externe (20) compris entre 250 mm et 600 mm.

3. Conduite flexible selon l'une des revendications 1 ou 2 **caractérisée en ce que** les spires de la bande (22) sont liées entre elles.

4. Conduite flexible selon l'une quelconque des revendications 1 à 3 **caractérisée en ce que** les spires de la bande (22) présentent un recouvrement.

5. Conduite flexible selon l'une des revendications précédentes **caractérisée en ce que** la bande (22) est enroulée selon un angle d'hélice de valeur absolue comprise entre 60° et 90° par rapport à l'axe longitudinal (A) de la conduite flexible (10).

6. Conduite flexible selon l'une quelconque des revendications précédentes **caractérisée en ce que** la couche externe (20) comprend une pluralité de bandes (22) superposées, préférentiellement entre 2 à 8 bandes (22) superposées, au moins deux bandes (22) étant optionnellement croisées.

7. Conduite flexible selon l'une quelconque des revendications précédentes **caractérisée en ce que** les éléments de renfort (26) sont des fibres telles que des fibres organiques, des fibres minérales ou des fibres métalliques.

8. Conduite flexible selon l'une quelconque des revendications précédentes **caractérisée en ce que** les éléments de renfort (26) sont orientés selon un angle de valeur absolue comprise entre 0 et 40° par rapport à l'axe longitudinal de la bande (22).

9. Conduite flexible selon l'une quelconque des revendications précédentes **caractérisée en ce que** la matrice polymérique (24) est choisie parmi les matériaux thermoplastiques tels qu'un polyéthylène, un polypropylène, un polyamide ou les matériaux thermoplastiques élastomères tels qu'un thermoplastique vulcanisé, notamment un silicone thermoplastique vulcanisé ou les matériaux thermodurcissables.

10. Conduite flexible selon l'une quelconque des revendications précédentes **caractérisée en ce que** les éléments de renfort (26) sont noyés dans la matrice polymérique (24).

11. Procédé de fabrication d'une conduite flexible (10) pour le transport d'un fluide en milieu sous-marin comprenant les étapes suivantes :
(a) former une gaine interne (14) polymérique formant un passage de circulation du fluide,
(b) former au moins une paire de nappes d'armure de traction (18) pour renforcer la conduite flexible (10) contre des efforts axiaux,
(c) enrouler en hélice une bande (22) formant une pluralité de spires, ladite bande (22) étant formée d'une matrice polymérique (24) renforcée par une pluralité d'éléments de renfort (26) pour former une couche externe (20) imperméable aux composés liquides présentant une épaisseur comprise entre 1/125 et 1/75 du diamètre interne de la couche externe (20), la couche externe (20) et la gaine interne (14) délimitant un espace annulaire dans lequel ladite au moins une paire de nappes d'armure de traction (18) est agencée.

12. Procédé selon la revendication 11 **caractérisé en ce qu'**à l'étape (c) la bande (22) est enroulée avec un recouvrement des spires.

13. Procédé selon l'une des revendications 11 ou 12 **caractérisé en ce qu'**il comprend une étape de liaison des spires.

14. Procédé selon la revendication 13 **caractérisé en ce que** l'étape de liaison des spires comprend une sous étape de chauffage de la bande (22).

15. Procédé selon l'une quelconque des revendications 11 à 14 **caractérisé en ce qu'**il comprend une étape selon laquelle on applique une pression sur la bande (22).

## Patentansprüche

1. Flexible Leitung (10) für den Transport eines Fluids in Unterwasserumgebung, die eine Längsachse (A) aufweist und umfassend von der Innenseite zur Außenseite der Leitung (10):
- eine innere Hülle (14) aus Polymer, um einen Zirkulationsdurchgang des Fluids zu bilden,
- mindestens ein Paar von Zugbewehrungsmatten (18), um die flexible Leitung (10) gegen axiale Kräfte zu verstärken,
- eine flüssigkeitsundurchlässige Außenschicht (20), wobei die innere Hülle (14) und die Außenschicht (20) einen ringförmigen Raum begrenzen, in dem das mindestens eine Paar von Zugbewehrungsmatten (18) angeordnet ist,
- wobei die Außenschicht (20) eine Stärke zwischen 1/125 und 1/75 des Innendurchmessers der Außenschicht (20) aufweist und mindestens ein Band (22) umfasst, das spiralförmig gewickelt ist und eine Vielzahl von Windungen bildet, wobei das Band (22) aus einer Polymermatrix (24) gebildet ist, die durch eine Vielzahl von Verstärkungselementen (26) verstärkt ist.

2. Flexible Leitung nach Anspruch 1, **dadurch gekennzeichnet, dass** die Stärke der Außenschicht (20) zwischen 3 mm und 5 mm bei einem Innendurchmesser der Außenschicht (20) zwischen 250 mm und 600 mm beträgt.

3. Flexible Leitung nach einem der Ansprüche 1 oder 2, **dadurch gekennzeichnet, dass** die Windungen des Bands (22) untereinander verbunden sind.

4. Flexible Leitung nach einem der Ansprüche 1 bis 3, **dadurch gekennzeichnet, dass** die Windungen des Bands (22) eine Überlappung aufweisen.

5. Flexible Leitung nach einem der vorherigen Ansprüche, **dadurch gekennzeichnet, dass** das Band (22) unter einem Spiralwinkel mit einem Absolutwert zwischen 60° und 90° in Bezug auf die Längsachse (A) der flexiblen Leitung (10) gewickelt ist.

6. Flexible Leitung nach einem der vorherigen Ansprüche, **dadurch gekennzeichnet, dass** die Außenschicht (20) eine Vielzahl von übereinander liegenden Bändern (22) umfasst, vorzugsweise zwischen 2 und 8 übereinander liegenden Bändern (22), wobei mindestens zwei Bänder (22) optional überkreuz sind.

7. Flexible Leitung nach einem der vorherigen Ansprüche, **dadurch gekennzeichnet, dass** die Verstärkungselemente (26) Fasern, wie beispielsweise organische Fasern, Mineralfasern oder Metallfasern sind.

8. Flexible Leitung nach einem der vorherigen Ansprüche, **dadurch gekennzeichnet, dass** die Verstärkungselemente (26) in einem Winkel mit einem Absolutwert zwischen 0 und 40° zu der Längsachse des Bands (22) ausgerichtet sind.

9. Flexible Leitung nach einem der vorherigen Ansprüche, **dadurch gekennzeichnet, dass** die Polymermatrix (24) ausgewählt ist aus thermoplastischen Materialien, wie beispielsweise Polyethylen, Polypropylen, Polyamid oder elastomeren thermoplastischen Materialien, wie beispielsweise einem vulkanisierten Thermoplast, insbesondere einem vulkanisierten thermoplastischen Silikon, oder wärmehärtenden Materialien.

10. Flexible Leitung nach einem der vorherigen Ansprüche, **dadurch gekennzeichnet, dass** die Verstärkungselemente (26) in die Polymermatrix (24) eingebettet sind.

11. Verfahren zur Herstellung einer flexiblen Leitung (10) für den Transport eines Fluids in einer Unterwasserumgebung, umfassend die folgenden Schritte:
(a) Bilden einer inneren Hülle (14) aus Polymer, die einen Zirkulationsdurchgang des Fluids bildet,
(b) Bilden von mindestens einem Paar von Zugbewehrungsmatten (18), um die flexible Leitung (10) gegen axiale Kräfte zu verstärken,
(c) spiralförmiges Wickeln eines Bands (22), der eine Vielzahl von Windungen bildet, wobei das Band (22) aus einer Polymermatrix (24) gebildet ist, die durch eine Vielzahl von Verstärkungselementen (26) verstärkt ist, um eine für flüssige Verbindungen undurchlässige Außenschicht (20) zu bilden, die eine Stärke zwischen 1/125 und 1/75 des Innendurchmessers der Außenschicht (20) aufweist, wobei die Außenschicht (20) und die innere Hülle (14) einen ringförmigen Raum begrenzen, in dem das mindestens eine Paar von Zugbewehrungsmatten (18) angeordnet ist.

12. Verfahren nach Anspruch 11, **dadurch gekennzeichnet, dass** das Band (22) in Schritt (c) mit einer Überlappung der Windungen aufgewickelt wird.

13. Verfahren nach einem der Ansprüche 11 bis 12, **dadurch gekennzeichnet, dass** es einen Schritt zum Verbinden der Windungen umfasst.

14. Verfahren nach Anspruch 13, **dadurch gekennzeichnet, dass** der Schritt eines Verbindens der Windungen einen Teilschritt eines Erwärmens des Bands (22) umfasst.

15. Verfahren nach einem der Ansprüche 11 bis 14, **dadurch gekennzeichnet, dass** es einen Schritt umfasst, bei dem Druck auf das Band (22) ausgeübt wird.

## Claims

1. A flexible pipe (10) for conveying a fluid in a submarine environment having a longitudinal axis (A) and comprising from the inside to the outside of the pipe (10):
- an inner polymeric sheath (14), to form a passage for circulation of fluid,
- at least one pair of tensile armor plies (18), to reinforce the flexible pipe (10) against axial forces;
- a liquid-impermeable outer layer (20), the inner sheath (14) and the outer layer (20) defining an annular space in which said at least one pair of tensile armor plies (18) is arranged
- said outer layer (20) having a thickness of between 1/125 and 1/75 of the internal diameter of the outer layer (20) and comprising at least one helically wound strip (22) forming a plurality of turns, said strip (22) being made of a polymer matrix (24) reinforced with a plurality of reinforcing elements (26).

2. The flexible pipe according to claim 1, **characterized in that** the thickness of the outer layer (20) is between 3 mm and 5 mm for an internal diameter of the outer layer (20) of between 250 mm and 600 mm.

3. The flexible pipe according to one of claims 1 or 2, **characterized in that** the turns of the strip (22) are bonded together.

4. The flexible pipe according to any one of claims 1 to 3, **characterized in that** the turns of the strip (22) have an overlap.

5. The flexible pipe according to any of the preceding claims, **characterized in that** the strip (22) is wound at a helix angle of absolute value of between 60° and 90° in relation to the longitudinal axis (A) of the flexible pipe (10).

6. The flexible pipe according to any one of the preceding claims, **characterized in that** the outer layer (20) comprises a plurality of superimposed strips (22), preferably between 2 and 8 superimposed strips (22), at least two strips (22) being optionnaly crossed.

7. The flexible pipe according to any one of the preceding claims, **characterized in that** the reinforcing elements (26) are fibers such as organic fibers, mineral fibers or metallic fibers.

8. The flexible pipe according to any one of the preceding claims, **characterized in that** the reinforcing elements (26) are oriented at an angle of absolute value of between 0° and 40° in relation to the longitudinal axis of the strip (22).

9. The flexible pipe according to any one of the preceding claims, **characterized in that** the polymer matrix (24) is chosen from among thermoplastic materials such as a polyethylene, a polypropylene, a polyamide or elastomeric thermoplastic materials such as a vulcanized thermoplastic, in particular a vulcanized thermoplastic silicone, or thermosetting materials.

10. The flexible pipe according to any one of the preceding claims, **characterized in that** the reinforcing elements (26) are embedded in the polymer matrix (24).

11. A method of manufacturing a flexible pipe (10) for conveying a fluid in a submarine environment comprising the following steps:
(a) forming a polymeric inner sheath (14) forming a passage for circulation of fluid,
(b) forming at least one pair of tensile armor plies (18), to reinforce the flexible pipe (10) against axial forces
(c) helically winding a strip (22) forming a plurality of turns, said strip (22) being made of a polymer matrix (24) reinforced with a plurality of reinforcing elements (26) to form a liquid-impermeable outer layer (20) compounds having a thickness of between 1/125 and 1/75 of the internal diameter of the outer layer (20), the outer layer (20) and the inner sheath (14) defining an annular space in which the at least one pair of tensile armor plies (18) is arranged.

12. The method according to claim 11, **characterized in that** in step (c) the strip (22) is wound with an overlap of the turns.

13. The method according to any of claims 11 or 12, **characterized in that** it comprises a step of bonding the turns.

14. The method according to claim 13, **characterized in that** the step of bonding the turns comprises a sub-step of heating the strip (22).

15. The method according to any one of claims 11 to 14, **characterized in that** it comprises a step in which pressure is applied to the strip (22).
